# EUROPÄISCHE PATENTSCHRIFT

(11) **EP 2 159 121 B1**
(45) Veröffentlichungstag und Bekanntmachung des Hinweises auf die Patenterteilung: **18.09.2013**
(21) Anmeldenummer: 09165371.7
(22) Anmeldetag: 14.07.2009
(51) Int. Cl.: B60W 30/06, B62D 15/02

(54) **Steuereinrichtung und Verfahren zur Durchführung eines automatischen Einparkvorgangs**
Control device and method for executing an automatic parking process
Dispositif de commande et procédé d'exécution d'un processus de stationnement automatique

(30) Priorität: 29.08.2008 DE 102008041681
(43) Veröffentlichungstag der Anmeldung: 03.03.2010
(73) Patentinhaber: Robert Bosch GmbH, 70442 Stuttgart (DE)
(72) Erfinder: Koehler, Markus, 71636, Ludwigsburg (DE); Scherl, Michael, 74321, Bietigheim (DE); Haug, Matthias, 70469, Stuttgart (DE); Zimmermann, Uwe, 71686, Remseck (DE)

(56) Entgegenhaltungen:
- EP-A2- 1 516 767
- EP-A2- 1 867 557
- WO-A1-2006/050710
- WO-A1-2008/022845
- DE-A1-102004 044 777
- DE-A1-102005 035 883
- US-B1- 6 302 823

## Beschreibung

### Stand der Technik

Die Erfindung geht aus von einer Steuereinrichtung und einem Verfahren zur Durchführung eines automatischen Einparkvorgangs nach der Gattung der nebengeordneten Ansprüche. Aus der DE 197 03 517 A1 ist bereits ein Verfahren zur Durchführung von Steuereingriffen zum Parken eines Kraftfahrzeugs sowie eine Vorrichtung zur Durchführung des Verfahrens bekannt. Vor der Durchführung der Steuereingriffe erfolgt eine Vermessung der Parklücke, wobei eine Durchführung der Steuereingriffe erst dann erfolgt, wenn ein durch einen Benutzer einzugebendes Bestätigungssignal für den Beginn des Parkvorgangs vorliegt. Dann wird das Fahrzeug selbständig entlang einer Sollkurve in die Parklücke geführt. Während der automatischen Fahrzeugführung wird dabei überprüft, ob die Bremse des Fahrzeugs während eines vorgegebenen Zeitraums betätigt wird. Ist dies der Fall, so wird der Parkvorgang beendet. Erfolgt jedoch eine kürzere Betätigung der Bremse, so führt dies nicht zu einem Abbruch des Parkvorgangs, sondern der Parkvorgang wird gegebenenfalls fortgesetzt.

In der Schrift WO 2006/050710 ist ein Verfahren zur automatischen Steuerung und/oder Regelung einer Bewegung eines Fahrzeugs während eines Einparkvorgangs mittels eines Einparksystems beschrieben. Das Verfahren umfasst die Schritte Festlegen einer Soll-Strecke und Berechnen mittels der Steuer- und/oder Regeleinrichtung von zumindest einem Sollwert eines Längsbewegungsparameters in Abhängigkeit von zumindest einem Querbewegungsparameter und einer Position entlang der Soll-Strecke. Durch die Steuerung wird die durch ein Antriebsaggregat des Fahrzeugs bereitgestellte Antriebsleistung, insbesondere der Fahrzeuggeschwindigkeit, variiert. Die maximale Längsgeschwindigkeit des Fahrzeugs ist dabei begrenzt und wird während des Einparkvorgangs adaptiert. Dies geschieht z. B. wenn über Sensoren ein immer geringer werdender Abstand zu einem Objekt detektiert wird. Es wird dabei die maximale Längsgeschwindigkeit reduziert. Die maximale Längsgeschwindigkeit kann jedoch während des Einparkvorgangs durch eine Bedieneinheit weder adaptiert noch erhöht werden.

Der nächstliegende Stand der Technik ist in der WO 2006/050710 zu sehen.

### Offenbarung der Erfindung

### Vorteile der Erfindung

Die erfindungsgemäße Steuereinrichtung zur Durchführung eines automatischen Einparkvorgangs mit den Merkmalen des Hauptanspruchs hat demgegenüber den Vorteil, dass eine Geschwindigkeit für ein automatisches Einparken durch den Fahrer im Rahmen der Leistungsfähigkeit des Einparksystems, insbesondere im Rahmen der Eigenschaften der automatischen Lenkung und der Umfelderfassung, frei gewählt werden kann. So ist es möglich, eine vorgegebene maximale Geschwindigkeit des Systems auf einen Fahrerwunsch hin in diesem Rahmen zu erhöhen. Somit kann der Fahrer für die Durchführung des automatischen Einparkvorgangs eine für ihn genehme Geschwindigkeit wählen, die insbesondere bei einer größeren Erfahrung mit einem automatischen Einparksystem durch den Benutzer auch höher gewählt werden kann, als bei einer anfänglichen Systemnutzung. Hierbei ist zu berücksichtigen, dass bei einer recht genauen zur Verfügung stehenden Umfelderfassung durch ein automatisches System möglicherweise eine Geschwindigkeit für einen Einparkvorgang darstellbar ist, die höher ist als ein Geschwindigkeitswert, den ein Fahrer bei einer selbständigen Steuerung für ein Einparken in eine Parklücke subjektiv noch als sicher empfinden würde. Eine solche höhere Geschwindigkeit könnte bei einem mit dem System noch nicht vertrauten Fahrer möglicherweise zu Irritationen und zu häufigen Bremseingriffen führen, die das System für einen Fahrer unkomfortabel erscheinen lassen können. Denn in einer solchen Situation könnte ein Fahrer gegebenenfalls recht häufig durch Bremseingriffe versuchen, die Geschwindigkeit des Einparkvorgangs herabzusetzen. Wird zunächst eine niedrige Geschwindigkeit für einen automatischen Einparkvorgang vorgegeben, so führt dies bei einem unerfahrenen Fahrer nicht zu Irritationen. Ist er jedoch mit dem System vertraut, kann er durch die erfindungsgemäße Steuereinrichtung eine maximale vorgegebene Geschwindigkeit, die die Steuereinrichtung bei einem automatischen Einparken wählt, selbständig erhöhen. Ein Maximalwert für eine Erhöhung ist dabei dann insbesondere durch Systemparameter bestimmt, wie beispielsweise eine maximale Lenkgeschwindigkeit oder die Reichweite von Umfelderfassungssektoren zur sicheren Detektion von Hindernissen auf einem Fahrweg. Somit wird vermieden, dass ein insbesondere mit dem System vertrauter Fahrer dann durch eine vermeintlich zu niedrige Einparkgeschwindigkeit ebenfalls wieder davon abgehalten wird, ein automatisches Einparken mit seinem Fahrzeug durchzuführen.

Entsprechende Vorteile ergeben sich für ein erfindungsgemäßes Verfahren zur Durchführung eines automatischen Einparkvorgangs.

Durch die in den abhängigen Ansprüchen aufgeführten Maßnahmen sind vorteilhafte Weiterbildungen und Verbesserungen des in dem unabhängigen Anspruch angegebenen Verfahrens und der in dem unabhängigen Anspruch angegebenen Steuereinrichtung möglich. So ist es vorteilhaft, eine Führung des Fahrzeugs mit höchstens der vorgegebenen maximalen Geschwindigkeit nur dann freizugeben, wenn sich keine Hindernisse in dem Fahrweg befinden, um bei einer automatischen Führung des Fahrzeugs Kollisionen sicher zu vermeiden. Hierzu wird der Fahrweg vor dem Fahrzeug von Sensoren von einer Umfeldüberwachungseinheit überwacht. Werden Hindernisse erfasst, so wird eine Fahrzeugführung nicht freigegeben. Treten zu einem späteren Zeitpunkt Hindernisse auf dem Fahrweg auf, so wird bei einem Fahrzeug, das bereits automatische geführt wird, die automatischen Führung unterbrochen oder abgebrochen.

Weiterhin ist es vorteilhaft, die Bedieneinheit zur Erhöhung einer maximalen, vorgegebenen Geschwindigkeit als ein Gaspedal des Fahrzeugs auszuführen. Denn einem Benutzer ist es bereits bekannt, mit einem Gaspedal die Geschwindigkeit des Fahrzeugs zu erhöhen. Entsprechend kann durch eine Auswertung einer Betätigung des Gaspedals ein Wunsch nach einem schnelleren Durchführen des Einparkvorgangs registriert werden. In einer besonderen Ausführungsform erfolgt dabei keine Umsetzung entsprechend bei einer herkömmlichen Bedienung des Gaspedals, sondern es wird eine gesonderte Abhängigkeit einer Motorleistung von einer Pedalstellung vorgegeben, da möglicherweise ansonsten eine maximale, technisch mögliche Geschwindigkeit schnell erreicht wäre. So ist es beispielsweise möglich, eine geringere Motorleistung als üblich mit einer jeweiligen Auslenkung des Gaspedals zu verbinden. Ferner ist es auch möglich, mit einer Betätigung des Gaspedals eine schrittweise Erhöhung der Geschwindigkeit durchzuführen.

Ferner ist es vorteilhaft, eine maximale, vorgegebene Geschwindigkeit zu einem Abruf in einer Speichereinrichtung der Steuereinrichtung abzulegen. Hat ein Benutzer einmal eine für ihn angenehme Geschwindigkeit gewählt, so wird diese bei einer Initialisierung eines automatischen Einparksystems ausgelesen und für den automatischen Einparkvorgang vorgegeben.

Es ist weiterhin vorteilhaft, dass die Steuereinrichtung eine Recheneinheit zur Berechnung eines Fahrwegs in eine Parklücke aufweist, da hierdurch sowohl die Ansteuerung des Fahrzeugs mit einer maximalen vorgegebenen Geschwindigkeit als auch einer Berechnung des Fahrwegs in eine Recheneinheit integriert werden können.

Es ist ferner vorteilhaft, eine Schnittstelle der Steuereinrichtung zu einer automatischen Lenkeinrichtung vorzusehen, um das Fahrzeug entlang der vorberechneten Bahn in die Parklücke zu führen und die Steuerung der Lenkung von der erfindungsgemäßen Steuereinrichtung aus durchzuführen.

Weiterhin ist es vorteilhaft, eine Schnittstelle zu einer weiteren Bedieneinheit zur Herabsetzung einer maximalen vorgegebenen Geschwindigkeit bzw. zu einem Abbruch des automatischen Einparkvorgangs vorzusehen. Hierbei wird es einem Benutzer ermöglicht, eine maximale vorgegebene Geschwindigkeit, gegebenenfalls auch unter Berücksichtigung einer jeweiligen Einparksituation oder seiner persönlichen Präferenzen, wieder herabzusetzen. In einer Ausführungsform kann dabei diese Bedieneinheit zugleich auch als diejenige Bedieneinheit vorgesehen sein, mit der während des Einparkens ein Einparkvorgang auch vollständig abgebrochen werden kann.

Um eine leichte und zugleich gut steuerbare Anpassung der maximalen vorgegebenen Geschwindigkeit vorzusehen, erfolgt eine Erhöhung einer maximalen vorgegebenen Geschwindigkeit durch den Fahrer vorzugsweise stufenweise.

Vorteilhaft ist es ferner, dem Fahrer eine vorgegebene maximale Geschwindigkeit anzuzeigen, da der Fahrer hierdurch eine gute Kontrolle über die während des Einparkvorgangs vorgesehene Geschwindigkeit hat.

Zudem erfolgt vorteilhaft eine automatische Verzögerung des Fahrzeugs, sollten während des Einparkvorgangs Hindernisse in einem Fahrweg des Fahrzeugs erfasst werden, um eine Kollision sicher zu vermeiden.

### Kurze Beschreibung der Zeichnungen

Ausführungsbeispiele der Erfindung sind in den Zeichnungen dargestellt und in der nachfolgenden Beschreibung näher erläutert. Es zeigen
Figur 1 eine schematische Aufsicht auf ein Kraftfahrzeug mit einer erfindungsgemäßen Steuereinrichtung zur Durchführung eines automatischen Einparkvorgangs,
Figur 2 einen Ablauf eines automatischen Einparkvorgangs in eine Parklücke,
Figur 3 ein Ausführungsbeispiel für einen Verfahrensablauf eines erfindungsgemäßen Verfahrens zur Durchführung eines automatischen Einparkvorgangs.

### Ausführungsformen der Erfindung

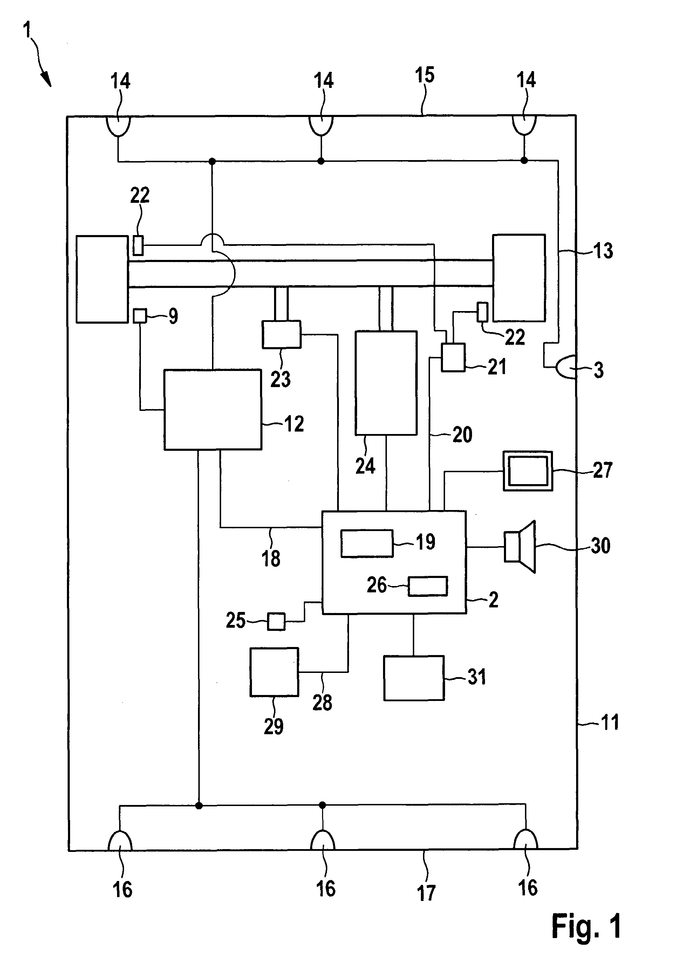

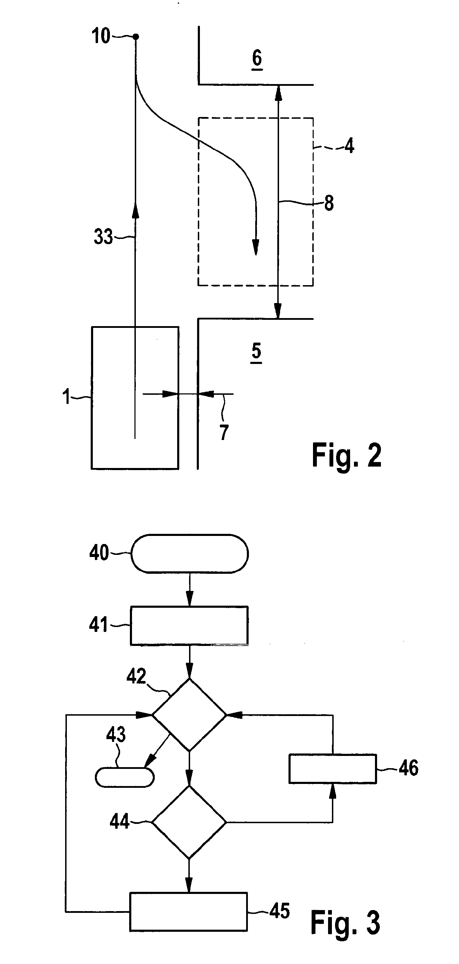

In der Figur 1 ist schematisch ein Kraftfahrzeug 1 dargestellt, das eine Steuereinrichtung 2 zur Durchführung eines automatischen Einparkvorgangs aufweist. Für die Durchführung des automatischen Einparkvorgangs fährt das Fahrzeug 1 von einer Ausgangsposition gemäß der Darstellung in der Figur 2 entlang einer Fahrspur 33 in eine Parkposition 4, die in der Figur 2 gestrichelt dargestellt ist. Die Fahrspur 33 bezeichnet dabei den Verlauf der Mitte der Hinterachse des Fahrzeugs 1 während des Einparkens. Während einer Vorbeifahrt an der Parkposition 4 misst ein seitlich an dem Fahrzeug 1 angeordneter Sensor 3 einen Abstand 7 zu Hindernissen 5, 6 an einem Straßenrand und bestimmt damit einen Bereich zwischen den Hindernissen 5, 6, in denen möglicherweise Platz für das Fahrzeug 1 ist. Indem die Abstandswerte 7 zu einer zurückgelegten Fahrstrecke in Relation gesetzt werden, kann eine Länge 8 einer Parklücke zwischen dem Hindernis 5 und dem Hindernis 6 bestimmt werden. Hierzu werden Signale eines Wegsensors 9 ausgewertet, über den eine zurückgelegte Fahrstrecke des Fahrzeugs 1 ermittelt wird. Ferner kann die Position des Fahrzeugs 1 zu den gemessenen Abstandswerten unter Berücksichtigung der zurückgelegten Fahrstrecke in Relation gesetzt werden, so dass ausgehend von einem Anhaltepunkt 10 eine Fahrstrecke des Fahrzeugs 1 in die Parkposition 4 bestimmt werden kann. Das Fahrzeug wird nun bei einer im Vergleich zu der Länge des Fahrzeugs ausreichend langen, vorliegenden Parklücke automatisch in die Parkposition 4 gelenkt und gefahren.

Der Sensor 3, der beispielsweise als ein Ultraschallsensor oder als ein Radarsensor ausgeführt ist, ist an einer rechten Seite 11 des Fahrzeugs 1 angeordnet. Der Sensor 3 ist mit einer Umfeldüberwachungseinheit 12 über einen Datenbus 13 verbunden. In einer Ausführungsform sind an den Datenbus 13 ferner noch Sensoren 14 angeschlossen, die an einer Frontseite 15 des Fahrzeugs angeordnet sind. Ferner ist es auch möglich, die Sensoren 3, 14 jeweils einzeln mit der Umfeldüberwachungseinheit 12 zu verbinden. In einer Ausführungsform ist zusätzlich der Wegsensor 9, der beispielsweise als ein Raddrehzahlsensor ausgeführt ist, mit der Umfeldüberwachungseinheit 12 verbunden. Ferner sind auch Abstandssensoren 16, die an einer Rückseite 17 des Fahrzeugs angeschlossen sind, mit der Umfeldüberwachungseinheit 12 verbunden. Die Umfeldüberwachungseinheit 12 weist eine Recheneinheit auf, die aus den ermittelten Daten des Abstandssensors 3 und des Wegsensors 9 eine Umgebungssituation an der rechten Fahrzeugseite ermittelt. Ferner sind die Abstandssensoren 14, 16 dazu ausgelegt, einen Fahrweg des Fahrzeugs während einer Durchführung eines automatischen Einparkvorgangs zu überwachen. Wird ein Hindernis bei einer Vorwärtsfahrt des Fahrzeugs von den Abstandssensoren 14 ermittelt oder wird ein Hindernis bei einer automatisch gesteuerten Rückwärtsfahrt von den Sensoren 16 an der Rückseite 17 des Fahrzeugs ermittelt, so wird das Fahrzeug angehalten und gegebenenfalls wird der automatische Einparkvorgang abgebrochen. Hierzu ist die Umfeldüberwachungseinheit 12 über eine Schnittstelle 18 mit der Steuereinrichtung 2 verbunden. Die Steuereinrichtung 2 weist eine Recheneinheit 19 auf, die die von der Umfeldüberwachungseinheit 12 gelieferten Daten verarbeitet. Wird eine Verzögerung des Fahrzeugs beispielsweise in Folge eines in dem Fahrweg des Fahrzeugs sich befindenden Hindernisses gewünscht, so wird eine Verzögerung von der Recheneinheit 19 veranlasst. Hierzu ist die Steuereinrichtung 2 über eine Schnittstelle 20 mit einer Bremsensteuereinrichtung 21 verbunden, die wiederum eine Fahrzeugbremse 22 ansteuert. Infolge der Ansteuerung der Fahrzeugbremse 22 wird das Fahrzeug gegebenenfalls verzögert.

Insbesondere ist die Steuereinrichtung 2 dazu ausgelegt, unter Berücksichtigung der von der Umfeldüberwachungseinheit 12 ermittelten Umgebungsdaten einen Fahrweg von einer aktuellen Position des Fahrzeugs in die gewünschte Parklücke zu ermitteln. Hat die Steuereinrichtung 2 den entsprechenden Einparkweg ermittelt, so steuert sie eine Fahrzeuglenkeinrichtung 23 und eine Fahrzeugantriebseinheit 24 an. Die Fahrzeuglenkeinrichtung 23 ist eine automatische Steuerung der Lenkung, so dass gemäß den Vorgaben der Steuereinrichtung 2 eine Lenkung des Fahrzeugs eingeschlagen werden kann. Die Antriebseinheit 24 ist beispielsweise als ein Verbrennungsmotor oder als ein Elektromotor ausgeführt und treibt wenigstens eine Antriebsachse des Fahrzeugs 1 an.

Wird ein automatisches Einparken eingeleitet, beispielsweise durch eine Betätigung eines entsprechenden Bedienelements, beispielsweise eines Startknopfes 25, veranlasst die Steuereinrichtung 2 einen Beginn des automatischen Einparkvorgangs. Das Fahrzeug wird hierbei entsprechend der auf Basis der von der Fahrzeugumfeldüberwachungseinheit 12 bereitgestellten Informationen entlang des berechneten Fahrweges geführt, wobei das Fahrzeug bis zu einer maximalen, vorgegebenen Geschwindigkeit beschleunigt wird. Diese maximale vorgegebene Geschwindigkeit ist in einem Speicher 26 der Steuereinrichtung 2 abgelegt. Die Steuereinrichtung 2 veranlasst nun einen Antrieb der Fahrzeugantriebseinheit 24 derart, dass die maximale, vorgegebene Geschwindigkeit erreicht wird. Gegebenenfalls ist es auch möglich, beispielsweise für den Fall, dass ein Einparkvorgang in einer Hanglage erfolgt, dass eine Begrenzung der jeweiligen Fahrzeuggeschwindigkeit auf die maximale vorgegebene Geschwindigkeit erfolgt. Hierzu werden über das Bremssteuergerät 21 die Fahrzeugbremsen 22 angesteuert, um eine Beschleunigung in Folge der Hangantriebskraft über die maximale vorgegebene Geschwindigkeit hinaus zu vermeiden. In einer weiteren Ausführungsform ist es auch möglich, dass die maximale vorgegebene Geschwindigkeit kein konstanter Wert ist, sondern von einem Einschlagswinkel der automatischen Lenkung abhängt. So ist es beispielsweise möglich, dass bei besonders starken Einschlagswinkeln oder bei besonders großen Lenkänderungen eine geringere maximale vorgegebene Geschwindigkeit in dem Speicher 26 vorgegeben ist. Entsprechende Werte können in dem Speicher 26 in einer Tabelle abgelegt sein.

In einer Ausführungsform ist es ferner möglich, dass die Steuereinrichtung 2 mit einer Anzeige 27 verbunden ist. In der Anzeige 27 wird die maximale vorgegebene Geschwindigkeit einem Benutzer angezeigt, beispielsweise in einem Kombiinstrument vor dem Fahrer.

Stellt ein Benutzer während einer Durchführung des Einparkvorgangs fest, dass die vorgegebene, maximale Geschwindigkeit aus seiner Ansicht zu niedrig ist, so ist die Steuereinrichtung 2 über eine Schnittstelle 28 mit einer Bedieneinheit 29 verbunden, die einer Heraufsetzung der maximalen, vorgegebenen Geschwindigkeit dient. In einer ersten Ausführungsform ist das Bedienelement 29 als ein Gaspedal des Fahrzeugs 1 ausgeführt. Wird während einer Durchführung des automatischen Einparkvorgangs das Gaspedal betätigt, so wird die maximale, vorgegebene Geschwindigkeit heraufgesetzt. In einer ersten Ausführungsform kann für jede Betätigung des Gaspedals bzw. in einer anderen Ausführungsform für jede Betätigung des Gaspedals über einen vorgegebenen Wert hinaus die maximale, vorgegebene Geschwindigkeit um einen vorgegebenen Geschwindigkeitswert heraufgesetzt werden, beispielsweise um 1 km/h. In einer weiteren Ausführungsform ist es auch möglich, das Maß eines Heraufsetzens der maximalen vorgegebenen Geschwindigkeit von einem Grad der Betätigung bzw. der Auslenkung des Gaspedals abhängig zu machen.

In einer weiteren Ausführungsform ist es entsprechend auch möglich, dass ein Heraufsetzen der maximalen vorgegebenen Geschwindigkeit über eine Bedieneinheit in Form eines Bedienelemente eines Fahrzeuggeschwindigkeitsreglers erfolgt, wie beispielsweise eines Geschwindigkeitsbegrenzers oder eines Tempomaten. Eine Änderung der maximalen, vorgegebenen Geschwindigkeit wird dabei in einer Ausführungsform in der Anzeige 27 angezeigt.

Wird bei einem Heraufsetzen der maximalen Geschwindigkeit eine Geschwindigkeit erreicht, die aus technischen Gründen für die Durchführung des automatischen Einparkvorganges maximal ist und die beispielsweise von Eigenschaften der Lenkung oder der Abstandssensoren 14, 16 bestimmt ist, so erfolgt in einer Ausführungsform eine entsprechende Warnung des Fahrers. Eine entsprechende Warnung kann beispielsweise in der Anzeige 27 oder über einen Lautsprecher 30 an einen Fahrer ausgegeben werden, beispielsweise in Form eines Warntons. Eine weitere Erhöhung der maximalen vorgegebenen Geschwindigkeit über die technisch bestimmte, noch sichere maximale Geschwindigkeit während des automatischen Einparkvorgangs erfolgt nicht.

Empfindet der Fahrer die maximale, vorgegebene Geschwindigkeit als zu hoch, so ist in einer weiteren Ausführungsform ein weiteres Bedienelement 31 vorgesehen, über dessen Bedienung der Fahrer die maximale, vorgegebene Geschwindigkeit herabsetzen kann. In einer Ausführungsform ist das Bedienelement 31 als ein Bremspedal des Fahrzeugs ausgeführt. Ferner ist es aber auch möglich, ein anderes Bedienelement, beispielsweise Drucktasten eines Geschwindigkeitsbegrenzers oder eines Tempomaten, für ein Herabsetzen der vorgegebenen, maximalen Geschwindigkeit vorzusehen.

In einer Ausführungsform ist es beispielsweise möglich, dass bei einer Betätigung des Bremspedals während des Einparkvorgangs die maximale, vorgegebene Geschwindigkeit auf einen Minimalwert, mit der ein automatisches Einparken sinnvoll erfolgen kann, beispielsweise 2 km/h herabgesetzt wird. Der Fahrer kann nun durch die Betätigung des Bedienelementes 29 die Geschwindigkeit während der Durchführung des automatischen Einparkvorgangs wieder bis zu einem von ihm gewünschten Geschwindigkeitswert bzw. bis zu der maximalen technisch möglichen Geschwindigkeit des automatischen Einparksystems erhöhen.

Ferner ist es auch möglich, die vorgegebene, maximale Geschwindigkeit in Abhängigkeit von einem Abstand zu einer Zielposition herabzusetzen. Hat sich das Fahrzeug beispielsweise auf 1m seiner Zielposition angenähert, so wird eine sanfte Verzögerung des Fahrzeugs durchgeführt, um ein ruckartiges Bremsen bei Erreichen einer Zielposition zu vermeiden.

Erfolgt ein automatisches Abbremsen des Fahrzeugs, beispielsweise in Folge eines Hindernisses, das sich während des automatischen Einparkvorgangs temporär in dem Fahrweg des Fahrzeugs aufhält, so wird nach einem Wegfall des Hindernisses das Fahrzeug wieder bis zu der maximalen, vorgegebenen Geschwindigkeit beschleunigt. Gleiches gilt auch dann, wenn die Einparkgeschwindigkeit durch den Fahrer selbst nur kurzfristig herabgesetzt wird, ohne die maximale vorgegebene Geschwindigkeit zu beeinflussen.

Ein Ausführungsbeispiel für einen Verfahrensablauf eines erfindungsgemäßen Einparkvorgangs ist in der Figur 3 dargestellt. Ausgehend von einem Initialisierungsschritt 40 wird ein automatischer Einparkvorgang gestartet. In einem Abfrageschritt 41 wird anschließend die maximale vorgegebene Geschwindigkeit aus dem Speicher 26 abgefragt. In einem ersten Abfrageschritt 42 wird überprüft, ob die Parkzielposition bereits erreicht ist. Ist dies der Fall, so wird das Verfahren in einem Endschritt 43 beendet. Ist dies nicht der Fall, so wird zu einem zweiten Prüfschritt 44 weiter verzweigt. In dem zweiten Prüfschritt 44 wird abgefragt, ob eine Korrektur der vorgegebenen maximalen Geschwindigkeit gewünscht ist. Ist dies nicht der Fall, so wird zu einem Regelschritt 45 weiter verzweigt, in dem die Antriebseinheit 24 bzw. die Fahrzeugsbremsen 22 derart angesteuert werden, dass das Fahrzeug möglichst mit der maximalen vorgegebenen Geschwindigkeit entlang der vorberechneten Bahnkurve in die Parklücke geführt wird. Danach wird zu dem ersten Prüfschritt 42 zurückverzweigt. Wird in dem zweiten Prüfschritt 44 festgestellt, dass eine Benutzereingabe vorliegt, die eine geänderte, maximale vorgegebene Geschwindigkeit verlangt, so wird zu dem Setzschritt 46 verzweigt und die vorgegebene maximale Geschwindigkeit wird geändert. In dem Setzschritt 46 wird dabei überprüft, ob hier eine maximale technische obere Grenze der Geschwindigkeit des Fahrzeugs bei einer Steuerung durch das Einparksystem mit einem Setzen einer neuen Geschwindigkeit nicht überschritten wird. Bei einem Überschreiten bleibt die maximale vorgegebene Geschwindigkeit ungeändert; ansonsten erfolgt eine Änderung. In einer weiteren Ausführungsform kann bei einer Herabsetzung einer maximalen vorgegebenen Geschwindigkeit auch geprüft werden, ob die maximale vorgegebene Geschwindigkeit nunmehr einen Minimalwert unterschreitet. Auch in diesem Fall kann eine Änderung der maximalen vorgegebenen Geschwindigkeit in dem Setzschritt 46 unterbleiben. Von dem Setzschritt 46 wird zu dem ersten Prüfschritt 42 zurückverzweigt.

Zu dem Endschritt 43 kann von dem ersten Prüfschritt 42 aus auch dann verzweigt werden, wenn eine Benutzereingabe vorliegt, beispielsweise ein starkes Durchtreten des Bremspedals, über die ein Abbruch des automatischen Einparkvorgangs ermittelt wird.

## Patentansprüche

1. Steuereinrichtung (2) zur Durchführung eines automatischen Einparkvorgangs mit einer Schnittstelle zu einer Fahrzeugantriebseinheit (24) zur Steuerung der Fahrzeugantriebseinheit (24) zur Führung des Fahrzeugs (1) mit einer vorgegebenen maximalen Geschwindigkeit, **dadurch gekennzeichnet, dass** die Steuereinrichtung (2) eine Schnittstelle (28) zu einer Bedieneinheit (29) zur Erhöhung der vorgegebenen maximalen Geschwindigkeit aufweist und die vorgegebene maximale Geschwindigkeit in einer Speichereinrichtung der Steuereinrichtung (2) abgelegt wird.

2. Steuereinrichtung nach Anspruch 1, **gekennzeichnet durch** eine Schnittstelle (18) zu einer Fahrzeugumfeldüberwachungseinheit (12, 3,14, 16) zur Erfassung von Hindernissen auf einem Fahrweg des Fahrzeugs und zur Freigabe einer Führung des Fahrzeugs bei einem von Hindernissen freien Fahrweg des Fahrzeugs.

3. Steuereinrichtung nach einem der vorhergehenden Ansprüche, **dadurch gekennzeichnet, dass** die Bedieneinheit (29) als ein Gaspedal des Fahrzeugs (1) ausgeführt ist.

4. Steuereinrichtung nach einem der vorhergehenden Ansprüche, **gekennzeichnet durch** eine Speichereinheit (26) zum Abruf der gespeicherten vorgegebenen maximalen Geschwindigkeit bei einer Initialisierung der Steuereinrichtung (2).

5. Steuereinrichtung nach einem der vorhergehenden Ansprüche, **gekennzeichnet durch** eine Recheneinheit (19) zur Berechung eines Fahrwegs des Fahrzeugs (1) in eine Parklücke.

6. Steuereinrichtung nach einem der vorhergehenden Ansprüche, **gekennzeichnet durch** eine Schnittstelle zu einer Lenkeinrichtung (23) des Fahrzeugs (1) zur Lenkung des Fahrzeugs in die Parklücke.

7. Steuereinrichtung nach einem der vorhergehenden Ansprüche, **gekennzeichnet durch** eine Schnittstelle zu einer Bedieneinheit (31) des Fahrzeugs, insbesondere zu einem Bremspedal, zur Eingabe einer Verzögerung zum Herabsetzen einer maximalen vorgegebenen Geschwindigkeit des Fahrzeugs oder zum Abbruch des automatischen Einparkens.

8. Verfahren zur Durchführung eines automatischen Einparkvorgangs, wobei eine Fahrzeugantriebseinheit des Fahrzeugs derart angesteuert wird, dass das Fahrzeug während des automatischen Einparkvorgangs auf eine vorgegebene maximale Geschwindigkeit beschleunigt wird, **dadurch gekennzeichnet,**
**dass** die vorgegebene maximale Geschwindigkeit über eine Betätigung einer Bedieneinheit erhöht wird und die Geschwindigkeit in einer Speichereinrichtung der Steuereinrichtung abgelegt wird.

9. Verfahren nach Anspruch 8, **dadurch gekennzeichnet, dass** die maximale vorgegebene Geschwindigkeit durch einen Fahrer stufenweise erhöht wird.

10. Verfahren nach einem der Ansprüche 8-9, **dadurch gekennzeichnet, dass** die vorgegebene maximale Geschwindigkeit angezeigt wird.

11. Verfahren nach einem der Ansprüche 8-10, **dadurch gekennzeichnet, dass** Hindernisse auf einem Fahrweg des Fahrzeugs erfasst werden und dass das Fahrzeug bei einer Erfassung eines Hindernisses in dem Fahrweg des Fahrzeugs verzögert wird.

## Claims

1. Control device (2) for executing an automatic parking process with an interface with a vehicle drive unit (24) for controlling the vehicle drive unit (24) in order to drive the vehicle (1) at a predefined maximum speed, **characterized in that** the control device (2) has an interface (28) with an operator control unit (29) for increasing the predefined maximum speed, and the predefined maximum speed is stored in a memory device of the control device (2).

2. Control device according to Claim 1, **characterized by** an interface (18) with a vehicle surroundings monitoring unit (12, 3, 14, 16) for sensing obstacles on a travel path of the vehicle and for enabling of the guidance of the vehicle when the travel path of the vehicle is free of obstacles.

3. Control device according to one of the preceding claims, **characterized in that** the operator control unit (29) is embodied as an accelerator pedal of the vehicle (1).

4. Control device according to one of the preceding claims, **characterized by** a memory unit (26) for retrieving the stored predefined maximum speed when the control device (2) is initialized.

5. Control device according to one of the preceding claims, **characterized by** a computing unit (19) for calculating a travel path of the vehicle (1) into a parking space.

6. Control device according to one of the preceding claims, **characterized by** an interface with a steering device (23) of the vehicle (1) for steering the vehicle into the parking space.

7. Control device according to one of the preceding claims, **characterized by** an interface with an operator control unit (31) of the vehicle, in particular with a brake pedal, for inputting a deceleration in order to reduce a maximum predefined speed of the vehicle or to abort the automatic parking.

8. Method for carrying out an automatic parking process, wherein a vehicle drive unit of the vehicle is actuated in such a way that during the automatic parking process the vehicle is accelerated to a predefined maximum speed, **characterized in that** the predefined maximum speed is increased by activating an operator control unit and the speed is stored in a memory device of the control device.

9. Method according to Claim 8, **characterized in that** the maximum predefined speed is increased incrementally by the driver.

10. Method according to one of Claims 8-9, **characterized in that** the predefined maximum speed is displayed.

11. Method according to one of Claims 8-10, **characterized in that** obstacles in a travel path of the vehicle are sensed, and **in that** when an obstacle is sensed in the travel path of the vehicle the vehicle is decelerated.

## Revendications

1. Dispositif de commande (2) pour exécuter une manoeuvre d'entrée en stationnement automatique, comprenant une interface avec un groupe propulseur de véhicule (24) pour commander le groupe propulseur de véhicule (24) pour guider le véhicule (1) avec une vitesse maximale prédéfinie, **caractérisé en ce que** le dispositif de commande (2) présente une interface (28) avec une unité de commande (29) pour augmenter la vitesse maximale prédéfinie et la vitesse maximale prédéfinie est stockée dans un dispositif de mémorisation du dispositif de commande (2).

2. Dispositif de commande selon la revendication 1, **caractérisé par** une interface (18) avec une unité de surveillance de l'environnement du véhicule (12, 3, 14, 16) pour détecter des obstacles sur une trajectoire du véhicule et pour valider un guidage du véhicule en présence d'une trajectoire du véhicule exempte d'obstacles.

3. Dispositif de commande selon l'une des revendications précédentes, **caractérisé en ce que** l'unité de commande (29) est réalisée sous la forme d'une pédale d'accélération du véhicule (1).

4. Dispositif de commande selon l'une des revendications précédentes, **caractérisé par** une unité de mémorisation (26) pour invoquer la vitesse maximale prédéfinie mémorisée lors d'une initialisation du dispositif de commande (2).

5. Dispositif de commande selon l'une des revendications précédentes, **caractérisé par** une unité de calcul (19) pour calculer une trajectoire du véhicule (1) dans un emplacement de stationnement.

6. Dispositif de commande selon l'une des revendications précédentes, **caractérisé par** une interface avec un dispositif de direction (23) du véhicule (1) pour diriger le véhicule dans l'emplacement de stationnement.

7. Dispositif de commande selon l'une des revendications précédentes, **caractérisé par** une interface avec une unité de manoeuvre (31) du véhicule, notamment avec une pédale de frein, pour la saisie d'un ralentissement en vue de diminuer une vitesse maximale prédéfinie du véhicule ou pour interrompre l'entrée en stationnement automatique.

8. Procédé pour exécuter une manoeuvre d'entrée en stationnement automatique, selon lequel un groupe propulseur de véhicule du véhicule est commandé de telle sorte que le véhicule, pendant la manoeuvre d'entrée en stationnement automatique, est accéléré à une vitesse maximale prédéfinie, **caractérisé en ce que** la vitesse maximale prédéfinie est augmentée par un actionnement d'une unité de manoeuvre et la vitesse est stockée dans un dispositif de mémorisation du dispositif de commande.

9. Procédé selon la revendication 8, **caractérisé en ce que** la vitesse maximale prédéfinie est augmentée par paliers par un conducteur.

10. Procédé selon l'une des revendications 8 à 9, **caractérisé en ce que** la vitesse maximale prédéfinie est affichée.

11. Procédé selon l'une des revendications 8 à 10, **caractérisé en ce que** des obstacles sur une trajectoire du véhicule sont détectés et **en ce que** le véhicule est ralenti en cas de détection d'un obstacle dans la trajectoire du véhicule.
